(19) Europäisches Patentamt / European Patent Office / Office européen des brevets

(11) **EP 3 950 807 B1**

(12) **EUROPEAN PATENT SPECIFICATION**

(45) Date of publication and mention
of the grant of the patent:
**01.11.2023 Bulletin 2023/44**

(21) Application number: **20778694.8**

(22) Date of filing: **24.03.2020**

(51) International Patent Classification (IPC):
**C08K 5/20** *(2006.01)*     **C08L 23/08** *(2006.01)*
**C08L 23/10** *(2006.01)*     **C08L 53/00** *(2006.01)*

(52) Cooperative Patent Classification (CPC):
(C-Sets available)
**C08L 53/00;** C08K 2201/014          (Cont.)

(86) International application number:
**PCT/JP2020/012854**

(87) International publication number:
**WO 2020/196458 (01.10.2020 Gazette 2020/40)**

(54) **OLEFIN-BASED POLYMER COMPOSITION**

POLYMERZUSAMMENSETZUNG AUF OLEFINBASIS

COMPOSITION DE POLYMÈRE À BASE D'OLÉFINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2019 JP 2019056712**

(43) Date of publication of application:
**09.02.2022 Bulletin 2022/06**

(73) Proprietor: **Mitsui Chemicals, Inc.**
**Tokyo 104-0028 (JP)**

(72) Inventors:
• **ISHIKAWA, Ryo**
**Sodegaura-shi, Chiba 299-0265 (JP)**
• **SASAKI, Masatoshi**
**Tokyo 105-7122 (JP)**
• **KUSUMOTO, Remi**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(56) References cited:
WO-A1-2009/138211     JP-A- H07 330 963
JP-A- H08 113 695      JP-A- H11 208 404
JP-A- H11 209 536      JP-A- 2008 115 274
US-A1- 2003 060 545    US-A1- 2004 014 854

(52) Cooperative Patent Classification (CPC): (Cont.)

C-Sets
**C08L 53/00, C08L 23/0815, C08K 5/20**

**Description**

Technical Field

The present invention relates to an olefin-based polymer composition.

Background Art

It is known that a lubricant is added to an olefin-based thermoplastic polymer composition. According to the technique disclosed in Patent Literature 1, higher fatty acid amide is added as a lubricant in order to acquire mold releasability when removing a formed product from a mold and slidability on the surface of a formed product.

The technique disclosed in Patent Literature 1 concerns a thermoplastic elastomer obtained by subjecting a composition supplemented with a lubricant to dynamic heat treatment in the presence of an organic peroxide and a crosslinking aid.

Citation List

Patent Literature

Patent Literature 1: JP H11-208404 A (1999) (Claim 1; Paragraph [0019])

Summary of Invention

Technical Problem

On the basis of the finding of the present inventors, it is considered that a composition that contains a cross-linked product is naturally excellent in terms of mold releasability because of the cross-linked product. In the case of a composition that does not contain a cross-linked product, in contrast, it is necessary to improve mold releasability with the addition of a lubricant in order to produce a formed product smoothly. When the amount of the lubricant added is increased, however, poor appearance or deteriorated anti-fogging properties caused by bleeding becomes problematic.

It is an object of the present invention to provide an olefin-based polymer composition that does not contain a cross-linked product but has achieved excellent mold releasability with the addition of a small amount of a lubricant.

Solution to Problem

The present invention is summarized as follows.

(1) A polymer composition comprising:

(A) 65 to 35 parts by mass of a copolymer containing a constitutional unit derived from ethylene and a constitutional unit derived from an $\alpha$-olefin having 3 to 20 carbon atoms;
(B) 35 to 65 parts by mass of a propylene-based polymer having a melting point of 135°C to 170°C measured by DSC (provided that the total of the component (A) and the component (B) is 100 parts by mass);
(C) 0.01 to 0.50 parts by mass of fatty acid amide with a molecular weight of 310 to 5,000 relative to 100 parts by mass of the total of the component (A) and the component (B); and
(D) 0.01 to 0.50 parts by mass of fatty acid amide with a molecular weight of 298 or less relative to 100 parts by mass of the total of the component (A) and the component (B),

wherein, when the amount of the component (C) is designated Wc and the amount of the component (D) is designated Wd, Wc/Wd is 0.5 to 1.5, and the component (A) is not crosslinked.
(2) The polymer composition according to (1), wherein the amount of the component (C) added and the amount of the component (D) added are each 0.10 to 0.50 parts by mass.
(3) The polymer composition according to (1) or (2), wherein the component (C) and the component (D) are each linear fatty acid amide.
(4) The polymer composition according to any of (1) to (3), wherein the component (C) is erucic acid amide.
(5) The polymer composition according to any of (1) to (4), wherein the component (D) is oleic acid amide.
(6) A formed product prepared from the polymer composition according to any of (1) to (5).
(7) A method for producing an injection-molded product comprising subjecting the polymer composition according to any of (1) to (5) to injection molding.

Advantageous Effects of the Invention

The present invention can provide an olefin-based polymer composition that does not contain a cross-linked product but has achieved excellent mold releasability with the addition of a small amount of a lubricant.

Description of Embodiments

<Component (A): Copolymer containing a constitutional unit derived from ethylene and a constitutional unit derived from an α-olefin having 3 to 20 carbon atoms>

In the present invention, a copolymer containing a constitutional unit derived from ethylene and a constitutional unit derived from an α-olefin having 3 to 20 carbon atoms used as the component (A) (hereinafter referred to as an "ethylene-based copolymer (A)") is preferably a copolymer mainly composed of ethylene and an α-olefin having 3 to 20 carbon atoms. Examples thereof include an amorphous random copolymer composed of ethylene and an α-olefin having 3 to 20 carbon atoms and an amorphous random copolymer composed of ethylene, an α-olefin having 3 to 20 carbon atoms, and a non-conjugated polyene. From the viewpoint of heat stability, an amorphous random copolymer that does not contain a constitutional unit derived from polyene is preferable.

Examples of the above α-olefin include, for example, propylene, 1-butene, 1-pentene, 1-hexene, 1-heptene, 1-octene, 1-nonene, 1-decene, 2-methyl-1-propene, 3-methyl-1-pentene, 4-methyl-1-pentene, and 5-methyl-1-hexene. Among these, propylene, 1-butene, 4-methyl-1-pentene, 1-hexene, and 1-octene are preferable. 1-Butene is particularly preferable. These α-olefins are used singly or as a mixture of two or more.

The molar ratio of ethylene to an α-olefin having 3 to 20 carbon atoms in the ethylene-based copolymer (A) is usually 55/45 to 85/15, preferably 60/40 to 83/17.

Examples of the above non-conjugated polyene include, for example, cyclic dienes such as dicyclopentadiene, cyclooctadiene, methylenenorbornene (for example, 5-methylene-2-norbornene), ethylidenenorbornene (for example, 5-ethylidene-2-norbornene), methyltetrahydroindene, 5-vinyl-2-norbornene, 5-isopropylidene-2-norbornene, 6-chloromethyl-5-isopropenyl-2-norbomene and norbornadiene; chain dienes such as 1,4-hexadiene, 3-methyl-1,4-hexadiene, 4-methyl-1,4-hexadiene, 5-methyl-1,4-hexadiene, 4,5-dimethyl-1,4-hexadiene, 6-methyl-1,6-octadiene, 7-methyl-1,6-octadiene, 6-ethyl-1,6-octadiene, 6-propyl-1,6-octadiene, 6-butyl-1,6-octadiene, 6-methyl-1,6-nonadiene, 7-methyl-1,6-nonadiene, 6-ethyl-1,6-nonadiene, 7-ethyl-1,6-nonadiene, 6-methyl-1,6-decadiene, 7-methyl-1,6-decadiene, 6-methyl-1,6-undecadiene and 7-methyl-1,6-octadiene; and trienes such as 2,3-diisopropylidene-5-norbornene and 2-ethylidene-3-isopropylidene-5-norbornene. In the case of comprising the non-conjugated polyene, the iodine value of the ethylene-based copolymer (A) is usually 0.1 to 20, preferably 1 to 20.

As the ethylene-based copolymer (A), ethylene-1-butene copolymer is preferable.

The density of the ethylene-based copolymer (A) is usually 850 to 870 kg/m$^3$, preferably 855 to 870 kg/m$^3$.

The MFR (ISO1133, 190°C, load 2.16 kg) of the ethylene-based copolymer (A) is usually 0.1 to 50 g/10 min, preferably 0.1 to 10 g/10 min.

The MFR (ISO1133, 230°C, load 2.16 kg) of the ethylene-based copolymer (A) is usually 0.2 to 100 g/10 min, preferably 0.2 to 20 g/10 min.

The Mooney viscosity [$ML_{1+4}$ (125°C)] of the ethylene-based copolymer (A) is usually 35 to 300, preferably 40 to 160.

Concerning the ethylene-based copolymer (A), a melting point (Tm) measured by differential scanning calorimetry (DSC) is preferably 170°C or lower (more preferably 100°C or lower, and further preferably 90°C or lower) or not detected. When a "melting point is not detected" herein, the heat of fusion (ΔH) is less than 1 J/g.

The ethylene-based copolymer (A) used in the present invention may be a so-called "oil-extended rubber" produced with the addition of a softening agent (preferably a mineral oil-based softening agent). Examples of mineral oil-based softening agents include known mineral oil-based softening agents, such as paraffin-based process oil.

The amount of the ethylene-based copolymer (A) added is 35 to 65 parts by mass, and preferably 45 to 60 parts by mass, relative to 100 parts by mass of the total of the ethylene-based copolymer (A) and the propylene-based polymer (B). When the amount of the ethylene-based copolymer (A) added is less than 35 parts by mass, disadvantageously, rigidity may be enhanced and impact resistance at low temperature may be deteriorated to a significant extent. When such amount exceeds 65 parts by mass, flowability or crystallinity may become insufficient, and the composition may not be suitable for injection molding.

In the present invention, it is necessary that the ethylene-based copolymer (A) is not crosslinked from the viewpoint of mold releasability achieved with the aid of a lubricant.

4

<Component (B): Propylene-based polymer>

Examples of the propylene-based polymer used as the component (B) in the present invention (hereinafter referred to as "propylene-based polymer (B)") include a crystalline high-molecular-weight solid product obtained by polymerization of propylene alone or polymerization of propylene with another monoolefin or two or more other monoolefins by a high pressure process or low pressure process. Examples of such polymers include an isotactic monoolefin polymer and a syndiotactic monoolefin polymer.

The propylene-based polymer (B) may be synthesized in accordance with a conventional technique, or a commercially available product may be used.

The propylene-based polymer (B) may be used alone or in combinations of two or more.

A preferable starting material olefin for the propylene-based polymer (B) other than propylene is an α-olefin having 2 or 4 to 20 carbon atoms. Specific examples thereof include ethylene, 1-butene, 1-pentene, 1-hexene, 1-octene, 1-decene, 2-methyl-1-propene, 3-methyl-1-pentene, 4-methyl-1-pentene, and 5-methyl-1-hexene. Such α-olefin having 2 or 4 to 20 carbon atoms may be used alone or in combinations of two or more. The form of polymerization may be random type or block type as long as a resinous product can be obtained. These propylene-based polymers can be used alone or in combinations of two or more.

The propylene-based polymer (B) generally has MFR (ISO1133, 230°C, load 2.16 kg) of 20 to 200 g/10 min, and preferably 40 to 70 g/10 min, from the viewpoint of injection moldability and impact resistance at low temperature.

Concerning the propylene-based copolymer (B), a melting point (Tm) measured by differential scanning calorimetry (DSC) is 135°C to 170°C, and preferably 155°C to 165°C. When the melting point (Tm) is lower than 135°C, impact resistance at low temperature may be improved while rigidity may be deteriorated. When the melting point is over 170°C, rigidity may be enhanced while impact resistance at low temperature may be deteriorated.

The density of the propylene-based polymer (B) is generally 890 to 910 kg/m$^3$, and preferably 900 to 910 kg/m$^3$.

The propylene-based polymer (B) improves flowability and heat resistance of the olefin-based polymer composition.

The amount of the propylene-based polymer (B) added is 35 to 65 parts by mass, and preferably 40 to 55 parts by mass, relative to 100 parts by mass of the total of the ethylene-based copolymer (A) and the propylene-based polymer (B). When the amount of the propylene-based polymer (B) added is less than 35 parts by mass, disadvantageously, flowability may become insufficient, and the composition may not be suitable for injection molding. When such amount exceeds 65 parts by mass, rigidity may be enhanced while impact resistance at low temperature may be deteriorated to a significant extent.

<Fatty acid amides as Component (C) and Component (D)>

In the present invention, fatty acid amides are used as the component (C) and the component (D).

When a fatty acid amide as the component (C) or the component (D) is branched, such fatty acid amide is likely to remain inside the resin. In the present invention, accordingly, fatty acid amides used as the component (C) and the component (D) are preferably linear fatty acid amides, so that fatty acid amides would not remain inside the resin, they would adequately bleed on the resin surface at the time of molding, and the targeted mold releasability would be achieved.

<Component (C): Fatty acid amide with a molecular weight of 310 to 5,000>

In the present invention, fatty acid amide used as the component (C) (hereinafter referred to as "fatty acid amide (C)") has a molecular weight of 310 to 5,000. Any fatty acid amide that can function as a lubricant can be used without particular limitation. Examples thereof include unsaturated fatty acid amide, saturated fatty acid amide, substituted amide, methylol amide, saturated bisamide, and unsaturated bisamide. A molecular weight of fatty acid amide (C) is preferably 310 to 691, more preferably 310 to 400, and further preferably 310 to 340.

Specific examples of fatty acid amide (C) include erucic acid amide (molecular weight: 338), behenic acid amide (molecular weight: 340), and hexamethylene bis behenic acid amide (molecular weight: 691), with erucic acid amide and behenic acid amide being preferable.

The amount of fatty acid amide (C) added is 0.01 to 0.50 parts by mass, preferably 0.10 to 0.50 parts by mass, and more preferably 0.10 to 0.30 parts by mass, relative to 100 parts by mass of the total of the ethylene-based copolymer (A) and the propylene-based polymer (B). When the amount of fatty acid amide (C) added is less than 0.01 parts by mass, the amount thereof remaining on the resin surface is small at the time of molding, and it would not contribute to achieve sufficient mold releasability. When such amount is over 0.50 parts by mass, fatty acid amide would bleed on the surface, and such bleeding would result in poor appearance.

<Component (D): Fatty acid amide with a molecular weight of 298 or less>

In the present invention, fatty acid amide used as the component (D) (hereinafter referred to as "fatty acid amide (D)") has a molecular weight of 298 or less. Any fatty acid amide that can function as a lubricant can be used without particular limitation. Examples thereof include unsaturated fatty acid amide, saturated fatty acid amide, substituted amide, methylol amide, saturated bisamide, and unsaturated bisamide. A molecular weight of fatty acid amide (D) is preferably 115 to 298, more preferably 199 to 298, and further preferably 280 to 298. When a molecular weight of fatty acid amide (D) is within the range described above, the composition would be excellent in terms of bleeding on the surface of the formed product.

Specific examples of fatty acid amide (D) include oleic acid amide (molecular weight: 282), stearic acid amide (molecular weight: 284), lauric acid amide (molecular weight: 199), caproic acid amide (molecular weight: 115), and ricinoleic acid amide (molecular weight: 298), with oleic acid amide and stearic acid amide being preferable.

The amount of fatty acid amide (D) added is 0.01 to 0.50 parts by mass, preferably 0.10 to 0.50 parts by mass, and more preferably 0.10 to 0.30 parts by mass, relative to 100 parts by mass of the total of the ethylene-based copolymer (A) and the propylene-based polymer (B). When the amount of fatty acid amide (D) added is less than 0.01 parts by mass, the amount thereof remaining on the resin surface is small at the time of molding, and it would not contribute to achieve sufficient mold releasability. When such amount is over 0.50 parts by mass, fatty acid amide would bleed on the surface, and such bleeding would result in poor appearance.

In the present invention, the amount of fatty acid amide (C) is designated Wc and the amount of fatty acid amide (D) is designated Wd, and Wc/Wd is 0.5 to 1.5, and preferably 0.8 to 1.2. When Wc/Wd is less than 0.5, the effects of the lubricant may be lowered upon sublimation because of a low molecular weight. When Wc/Wd is over 1.5, fatty acid amide is less likely to appear on the surface because of a high molecular weight, and the effects of the lubricant may be lowered.

<Other components>

The composition according to the present invention may be supplemented with other additives within a range not adversely affecting the effect of the present invention, in addition to the ethylene-based copolymer (A), the propylene-based polymer (B), the fatty acid amide (C) and the fatty acid amide (D). Additives are not particularly limited, and examples thereof include known additives used in the polyolefin field, such as a softening agent, fillers, acid acceptors, ultraviolet absorbers, antioxidants, heat stabilizers, light stabilizers, weathering stabilizers, antistatic agents, and metal soap.

It is preferable that the composition of the present invention be free of any crosslinked rubber from the viewpoint of the mold releasability achieved by the components (C) and (D).

In the composition of the present invention, the amounts of additives other than the ethylene-based copolymer (A), the propylene-based polymer (B), the fatty acid amide (C), and the fatty acid amide (D) added are not particularly limited, provided that the effects of the present invention are exerted. The total amount of other additives are generally 5 parts by mass or less, and preferably 0.5 to 3.0 parts by mass, relative to 100 parts by mass of the total of the ethylene-based copolymer (A) and the propylene-based polymer (B).

<Composition and formed product>

The composition of the present invention can be obtained by mixing at least the ethylene-based copolymer (A), the propylene-based polymer (B), the fatty acid amide (C), and the fatty acid amide (D) at a given ratio by, for example, a melt method or a solution method, and preferably by a melt kneading method. A melt kneading method that is generally used for thermoplastic resin can be adopted. The composition of the present invention can be prepared by, for example, mixing powdery or granular components with other additives, according to need, to obtain a homogeneous mixture with the use of a Henschel mixer, a ribbon blender, a V-blender, or the like, and kneading the mixture with the use of single- or twin-screw extruder, kneading rolls, a batch kneader, a kneader, a Banbury mixer, or the like. The components are preferably subjected to melt kneading at 160°C to 260°C, and more preferably at 180°C to 230°C (e.g., temperature of a cylinder when an extruder is used). The order and the method for kneading the components are not particularly limited.

The formed product according to the present invention is obtained by molding the composition of the present invention. The composition of the present invention can be subjected to a known molding technique, such as injection molding, extrusion molding, inflation molding, blow molding, extrusion blow molding, injection blow molding, press molding, vacuum molding, calendar molding, or foam molding, to obtain various types of formed products.

Among the molding techniques described above, injection molding is particularly preferable. In such a case, molding temperature is preferably 170°C to 260°C, and more preferably 180°C to 250°C, from the viewpoint of flowability, mold transferability, and oxidative degradation of resin components.

It is particularly preferable that the formed product of the present invention be used for automobile parts, such as automobile surface materials or automobile airbag cover materials.

The present specification encompasses the content described in the specification of JP 2019-056712 which is the basis of priority of the present application.

Examples

Hereafter, the present invention is described in greater detail with reference to the examples, although the scope of the present invention is not limited to these examples.

The methods of measurement of physical properties conducted in Examples and Comparative Examples are as follows.

[Melt flow rate: MFR]

The melt flow rate was measured at 230°C or 190°C under a load of 2.16 kg in accordance with ISO1133.

[Melting point (Tm)]

A melting point (Tm) is measured by differential scanning calorimetry (DSC) in the manner described below. The sample (about 5 mg) is filled in an aluminum pan for exclusive use. With the use of Diamond DSC (Perkin Elmer), the temperature is increased from 30°C to 230°C at 500°C/min, maintained at 230°C for 10 minutes, decreased from 230°C to 30°C at 10°C/min, and maintained at 30°C for an additional 1 minute. A melting point is then determined based on the endothermic curve obtained when temperature is increased at 10°C/min. When a plurality of peaks are detected via DSC, the temperature of the peak detected at highest temperature is designated as the melting point (Tm).

[Density]

Density was determined based on the weights of samples measured in water and in air in accordance with ISO1183 (the immersion method).

[Mold-release pressure]

At the time of molding using the injection molding apparatus descried below, a box-shaped formed product (width: 140 mm; length: 140 mm; thickness: 2 mm) was ejected from the mold, and the mold-release pressure at the time of ejection was measured using a pressure sensor of the ejector pin.

[Example 1 and Comparative Examples 1 to 3]

[Materials used]

(1) Ethylene-based copolymer (A)

As the ethylene-based copolymer (A), a commercially available pelletized ethylene-1-butene copolymer (EBR-1) (granular; average particle diameter: 10 mm) having the physical properties described below were used.

$$\text{A constitutional unit derived from ethylene/(a constitutional unit derived from ethylene + a constitutional unit derived from 1-butene)} = 80 \text{ mol\%}$$

MFR (ISO1133, 230°C, load: 2.16 kg): 0.9 g/10 min
MFR (ISO1133, 190°C, load: 2.16 kg): 0.5 g/10 min
Melting point (Tm): not detected (measurement temperature: 30°C to 230°C)
Density: 861 kg/m$^3$

(2) Propylene-based polymer (B)

As the propylene-based polymer (B), a commercially available pelletized propylene-ethylene block copolymer (PP-1) (granular; average particle diameter: 10 mm) having the physical properties described below were used.

Propylene content: 95 mol%
MFR (ISO1133, 230°C, load: 2.16 kg): 50 g/10 min
Melting point (Tm): 164°C
Density: 900 kg/m$^3$
Tensile modulus of elasticity (ISO527): 1450 MPa
Charpy impact strength (ISO179, 23°C): 10 kJ/m$^2$
Deflection temperature under load (ISO75, 1.8 MPa): 55°C

(3) Fatty acid amide (C)

As the fatty acid amide (C), erucic acid amide (NOF Corporation) (melting point (Tm): 79°C to 84°C; molecular weight: 338) was used.

(4) Fatty acid amide (D)

As the fatty acid amide (D), oleic acid amide (LION AKZO Co., Ltd.) (melting point (Tm): 74°C to 76°C; molecular weight: 282) was used.

Example 1

An ethylene-1-butene copolymer (EBR-1) (46 parts by mass) as the ethylene-based copolymer (A), 54 parts by mass of a propylene-ethylene block copolymer (PP-1) as the propylene-based polymer (B), 0.13 parts by mass of erucic acid amide as the fatty acid amide (C), and 0.12 parts by mass of oleic acid amide as the fatty acid amide (D) were thoroughly mixed using a Henschel mixer, and the mixture was subjected to extrusion kneading under the conditions described below.

<Extruder>

Model: KTX-46, Kobe Steel Ltd.
Cylinder temperature: C1 and C2: 120°C; C3 and C4: 140°C; C5 to C14: 200°C
Die temperature: 200°C
Screw rotation speed: 400 rpm
Extrusion capacity: 80 kg/h

With the use of the polymer composition obtained, an injection-molded product (a test piece) was produced using the injection molding apparatus described below, and a mold-release pressure was measured. The results are shown in Table 1.

<Injection molding apparatus>

Model: NEX140, Nissei Plastic Industrial Co., Ltd.
Cylinder temperature (injection molding temperature): 220°C
Mold temperature: 40°C

Comparative Examples 1 to 3

The procedure of Example 1 was performed in the same manner except that the amounts of the component (C) and the component (D) added were modified as shown in Table 1. The results are shown in Table 1.

[Table 1]

| Composition | Unit | Comp. Ex. 1 | Comp. Ex. 2 | Comp. Ex. 3 | Ex. 1 |
|---|---|---|---|---|---|
| Component (A): EBR-1 | Parts by mass | 46 | 46 | 46 | 46 |
| Component (B): PP-1 | Parts by mass | 54 | 54 | 54 | 54 |
| Component (C): Fatty acid amide (C) | Parts by mass | | 0.25 | 0.35 | 0.13 |
| Component (D): Fatty acid amide (D) | Parts by mass | 0.25 | | | 0.12 |
| Mold-release pressure | MPa | 8 | 9 | 4 | 1 |

As shown in Table 1, the present invention can provide an olefin-based polymer composition that has achieved excellent mold releasability with the addition of a small amount of a lubricant.

## Claims

1. A polymer composition comprising:

    (A) 65 to 35 parts by mass of a copolymer containing a constitutional unit derived from ethylene and a constitutional unit derived from an $\alpha$-olefin having 3 to 20 carbon atoms;
    (B) 35 to 65 parts by mass of a propylene-based polymer having a melting point of 135°C to 170°C measured by DSC (provided that the total of the component (A) and the component (B) is 100 parts by mass);
    (C) 0.01 to 0.50 parts by mass of fatty acid amide with a molecular weight of 310 to 5,000 relative to 100 parts by mass of the total of the component (A) and the component (B); and
    (D) 0.01 to 0.50 parts by mass of fatty acid amide with a molecular weight of 298 or less relative to 100 parts by mass of the total of the component (A) and the component (B),

    wherein, when the amount of the component (C) is designated Wc and the amount of the component (D) is designated Wd, Wc/Wd is 0.5 to 1.5, and the component (A) is not crosslinked.

2. The polymer composition according to Claim 1, wherein the amount of the component (C) added and the amount of the component (D) added are each 0.10 to 0.50 parts by mass.

3. The polymer composition according to Claim 1 or 2, wherein the component (C) and the component (D) are each linear fatty acid amide.

4. The polymer composition according to any one of Claims 1 to 3, wherein the component (C) is erucic acid amide.

5. The polymer composition according to any one of Claims 1 to 4, wherein the component (D) is oleic acid amide.

6. A formed product prepared from the polymer composition according to any one of Claims 1 to 5.

7. A method for producing an injection-molded product comprising subjecting the polymer composition according to any one of Claims 1 to 5 to injection molding.

## Patentansprüche

1. Polymerzusammensetzung, umfassend:

    (A) 65 bis 35 Masseteile eines Copolymers, das eine von Ethylen abgeleitete Grundeinheit und eine von einem $\alpha$-Olefin mit 3 bis 20 Kohlenstoffatomen abgeleitete Grundeinheit enthält;
    (B) 35 bis 65 Masseteile eines Polymers auf Propylenbasis mit einem Schmelzpunkt von 135°C bis 170°C, gemessen durch DSC (vorausgesetzt, dass die Gesamtmenge der Komponente (A) und der Komponente (B) 100 Masseteile beträgt);
    (C) 0,01 bis 0,50 Masseteile Fettsäureamid mit einem Molekulargewicht von 310 bis 5.000, bezogen auf 100 Masseteile der Gesamtmenge der Komponente (A) und der Komponente (B); und
(D) 0,01 bis 0,50 Masseteile Fettsäureamid mit einem Molekulargewicht von 298 oder weniger, bezogen auf 100 Masseteile der Gesamtmenge der Komponente (A) und der Komponente (B),

wobei, wenn die Menge der Komponente (C) mit Wc bezeichnet ist und die Menge der Komponente (D) mit Wd bezeichnet ist, Wc/Wd 0,5 bis 1,5 beträgt und die Komponente (A) nicht vernetzt ist.

2.  Polymerzusammensetzung gemäß Anspruch 1, wobei die Menge der zugegebenen Komponente (C) und die Menge der zugegebenen Komponente (D) jeweils 0,10 bis 0,50 Massenteile betragen.

3.  Polymerzusammensetzung gemäß Anspruch 1 oder 2, wobei die Komponente (C) und die Komponente (D) jeweils ein lineares Fettsäureamid sind.

4.  Polymerzusammensetzung gemäß mindestens einem der Ansprüche 1 bis 3, wobei die Komponente (C) Erucasäureamid ist.

5.  Polymerzusammensetzung gemäß mindestens einem der Ansprüche 1 bis 4, wobei die Komponente (D) Ölsäureamid ist.

6.  Geformtes Produkt, hergestellt aus der Polymerzusammensetzung gemäß mindestens einem der Ansprüche 1 bis 5.

7.  Verfahren zur Herstellung eines spritzgegossenen Produkts, bei dem die Polymerzusammensetzung gemäß mindestens einem der Ansprüche 1 bis 5 einem Spritzgussverfahren unterzogen wird.

## Revendications

1.  Composition de polymère, comprenant :

    (A) de 65 à 35 parties en masse d'un copolymère contenant une unité constitutive dérivée de l'éthylène et une unité constitutive dérivée d'une $\alpha$-oléfine comprenant de 3 à 20 atomes de carbone ;
    (B) de 35 à 65 parties en masse d'un polymère à base de propylène présentant un point de fusion compris entre 135°C et 170°C mesuré par DSC (à condition que le total du composant (A) et du composant (B) soit égal à 100 parties en masse) ;
    (C) de 0,01 à 0,50 partie en masse d'un amide d'acide gras présentant un poids moléculaire compris entre 310 et 5000 par rapport à 100 parties en masse du total du composant (A) et du composant (B) ; et
    (D) de 0,01 à 0,50 partie en masse d'un amide d'acide gras présentant un poids moléculaire égal à 298 ou moins par rapport à 100 parties en masse du total du composant (A) et du composant (B),

    dans lequel, lorsque la quantité du composant (C) est désignée par Wc et la quantité du composant (D) est désignée par Wd, Wc/Wd est de 0,5 à 1,5, et le composant (A) n'est pas réticulé.

2.  Composition de polymère selon la revendication 1, dans laquelle la quantité du composant (C) ajouté et la quantité du composant (D) ajouté sont chacune de 0,10 à 0,50 partie en masse.

3.  Composition de polymère selon la revendication 1 ou la revendication 2, dans laquelle le composant (C) et le composant (D) sont chacun un amide d'acide gras linéaire.

4.  Composition de polymère selon l'une quelconque des revendications 1 à 3, dans laquelle le composant (C) est un amide d'acide érucique.

5.  Composition de polymère selon l'une quelconque des revendications 1 à 4, dans laquelle le composant (D) est un amide d'acide oléique.

6.  Produit formé préparé à partir de la composition de polymère selon l'une quelconque des revendications 1 à 5.

7.  Procédé de fabrication d'un produit moulé par injection comprenant le fait de soumettre la composition de polymère selon l'une quelconque des revendications 1 à 5 à un moulage par injection.

**REFERENCES CITED IN THE DESCRIPTION**

**Patent documents cited in the description**

- JP H11208404 A
- JP 2019056712 A